# FASCICULE DE BREVET EUROPEEN

(11) **EP 3 468 143 B1**
(45) Date de publication et mention de la délivrance du brevet: **15.07.2020**
(21) Numéro de dépôt: 18198075.6
(22) Date de dépôt: 02.10.2018
(51) Int. Cl.: H04L 29/06, H04L 9/08, H04W 12/04, H04W 12/06, H04W 4/80, H04W 12/00

(54) **ÉTIQUETTE RFID POUR ACCÉDER DE MANIÈRE SÉCURISÉE À UN SERVICE AUPRÈS D'UN TERMINAL D'ACCÈS**
RFID-ETIKETT FÜR DEN GESICHERTEN ZUGANG ZU EINEM DIENS ÜBER EIN ZUGANGSENDGERÄT
RFID TAG FOR SECURELY ACCESSING A SERVICE FROM AN ACCESS TERMINAL

(30) Priorité: 04.10.2017 FR 1759291
(43) Date de publication de la demande: 10.04.2019
(73) Titulaire: Commissariat à l'énergie atomique et aux énergies alternatives, 75015 Paris (FR)
(72) Inventeur: SAVRY, Olivier, 38360 Sassenage (FR)
(74) Mandataire: Brevalex

(56) Documents cités:
- US-B1- 9 565 022
- DASS PRAJNAMAYA ET AL: "A Secure Authentication Scheme for RFID Systems", PROCEDIA COMPUTER SCIENCE, ELSEVIER, AMSTERDAM, NL, vol. 78, 3 avril 2016 (2016-04-03), pages 100-106, XP029492631, ISSN: 1877-0509, DOI: 10.1016/J.PROCS.2016.02.017
- SUREKHA B ET AL: "A Realistic Lightweight Authentication Protocol for Securing Cloud Based RFID System", 2016 IEEE INTERNATIONAL CONFERENCE ON CLOUD COMPUTING IN EMERGING MARKETS (CCEM), IEEE, 19 octobre 2016 (2016-10-19), pages 54-60, XP033047849, DOI: 10.1109/CCEM.2016.018

## Description

### DOMAINE TECHNIQUE

La présente invention concerne le domaine d'accès par une étiquette RFID à un service donné auprès d'un terminal d'accès de manière sécurisée via une clé de cryptographie. L'invention concerne en outre la mise à jour de la clé de cryptographie via un téléphone portable.

### ÉTAT DE LA TECHNIQUE ANTÉRIEURE

Actuellement, un téléphone portable équipé d'un lecteur en champ proche NFC (Near Field Communication) peut lire (et/ou écrire sur) des cartes ISO 14443 dites de proximité jusqu'à environ 10 cm et peut lire des étiquettes ISO 15693 dites de voisinage jusqu'à environ 1m du téléphone. En outre, on peut accéder de manière cryptée à un terminal d'accès via le téléphone NFC. En effet, une authentification d'une entité équipée d'un lecteur NFC peut être réalisée par le téléphone NFC de manière cryptée via une clé de cryptographie partagée avec cette entité. Dans ce cas, il est nécessaire que la clé de cryptographie soit stockée de manière sécurisée dans le téléphone. Elle peut être stockée dans la carte à puce (Secure Element) du téléphone, ou dans la carte SIM (ou la carte intelligente « UICC » Universal Integrated Circuit Card) permettant ainsi une utilisation passive du téléphone car ces deux circuits sont directement reliés au lecteur NFC. De plus, ces deux éléments sont les seuls présentant des capacités de stockage sécurisé allant jusqu'à la protection contre les attaques de type physique ou les attaques par canaux auxiliaires.

Toutefois, la carte à puce (Secure Element) est verrouillée par le constructeur du téléphone ou par le fournisseur (par exemple Android ou iOS) du système d'exploitation OS qui se réserve le droit exclusif d'utilisation principalement pour des applications de paiement. Pour les mêmes raisons, la carte SIM (ou UICC) est également verrouillée par les opérateurs téléphoniques.

Ainsi, un industriel voulant faire une application nécessitant l'utilisation passive du NFC n'a pas de solution viable. Sa seule alternative est de stocker la clé de cryptographie soit dans l'application même qu'il déploie sur le téléphone soit dans un processeur du type TEE (Trusted Execution Environment). Ces deux solutions ne permettent pas d'utiliser le lecteur NFC de manière passive (i.e. le téléphone étant éteint ou à cours de batterie). De plus, le processeur TEE n'est pas très sécurisé et d'un autre côté, le stockage dans l'application est exposé à toutes sortes d'attaques logicielles du type rétro-ingénierie, débordement de tampons (buffers overflow), logiciels malveillants (malwares), virus, etc.

Par ailleurs, une étiquette RFID ne peut pas être utilisée pour accéder de manière sécurisée via une clé de cryptographie à un service auprès d'un terminal d'accès et encore moins de protéger la clé de cryptographie des attaques extérieures.

"A secure authentication scheme for RFID systems" de Prajnamaya Dass et Hari Om, propose l'utilisation d'une étiquette RFID pour s'authentifier auprès d'un service par l'intermédiaire d'un lecteur RFID.

L'objet de la présente invention est de proposer un accès sécurisé par une étiquette RFID à un service donné auprès d'un terminal d'accès via une clé de cryptographie remédiant aux inconvénients précités et, en particulier, en utilisant de manière optimale et passive le NFC d'un téléphone pour sécuriser davantage l'accès au terminal d'accès.

### EXPOSÉ DE L'INVENTION

Cet objectif est atteint avec une étiquette RFID adaptée pour accéder à un service d'intérêt auprès d'un terminal d'accès, ladite étiquette comportant un circuit intégré configuré pour :
- permettre une authentification cryptographique de l'étiquette par ledit terminal d'accès via une clé de cryptographie courante partagée par l'étiquette et le terminal d'accès, ladite authentification permettant l'accès audit service d'intérêt, et
- permettre à l'étiquette de récupérer une nouvelle clé de cryptographie courante mise à jour par un téléphone NFC après l'authentification de l'étiquette par ledit téléphone NFC via une clé de cryptographie initiale préalablement partagée par l'étiquette et ledit téléphone. On notera que ladite clé de cryptographie initiale correspond à la clé de cryptographie précédemment courante, c'est-à-dire à celle qui est était comprise dans l'étiquette RFID avant la récupération de la nouvelle clé de cryptographie courante.

Ceci permet à un utilisateur d'accéder de manière sécurisée à un service ou une application d'intérêt avec une simple étiquette RFID, tout en permettant une mise à jour simple et sécurisée de la clé de cryptographie dans l'étiquette RFID (par exemple, quotidiennement) afin de contrer les vulnérabilités physiques de cette dernière. En outre, l'étiquette RFID reste toujours opérationnelle pour accéder au terminal d'accès même si le téléphone est éteint ou n'est plus opérationnel. En effet, le téléphone peut être éteint tant qu'une mise à jour d'une clé de cryptographie n'est pas nécessaire tout en gardant la fonctionnalité d'authentification. Par ailleurs, aucun stockage de clé dans le téléphone n'est nécessaire.

Avantageusement, ledit circuit intégré comporte des schémas d'authentification cryptographique ainsi que des commandes spécifiques de défi-réponse, d'authentification et de mise à jour de clé de cryptographie, définies selon le standard de l'ISO 15693-3 (amendement 4). De nombreuses fonctionnalités de sécurité peuvent ainsi être obtenues grâce à l'amendement 4 de l'ISO 15693-3.

Avantageusement, l'étiquette RFID est disposée à proximité dudit téléphone lors d'une opération de mise à jour de la clé de cryptographie. Ceci permet de mettre à jour la clé de manière simple tout en permettant à l'étiquette d'accéder à une application de manière sécurisée sans le téléphone.

Selon un autre mode de réalisation de l'invention, l'étiquette RFID est collée sur ledit téléphone. Ceci permet d'avoir l'étiquette RFID à proximité du téléphone en permanence.

Avantageusement, l'étiquette RFID est collée sur le dos du téléphone ou sur la coque protégeant le téléphone en vis-à-vis de l'antenne NFC du téléphone. Ceci permet un couplage optimal entre les deux antennes.

Selon un autre mode de réalisation de l'invention, l'étiquette RFID est collée sur une carte ou un badge.

L'invention concerne également un dispositif d'authentification comportant l'étiquette RFID selon l'une quelconque des caractéristiques précédentes ainsi qu'un téléphone NFC configuré pour authentifier l'étiquette RFID et pour mettre à jour la clé de cryptographie de l'étiquette RFID.

Avantageusement, le téléphone NFC est configuré pour :
- se connecter via une première liaison internet sécurisée à un serveur de fournisseur de service,
- récupérer depuis ledit serveur une clé de cryptographie initialement prédéfinie dans l'étiquette RFID,
- communiquer via sa fonctionnalité NFC avec l'étiquette RFID,
- authentifier l'étiquette RFID via ladite clé de cryptographie initialement partagée par l'étiquette RFID,
- mettre à jour la clé de cryptographie en lançant auprès du serveur de fournisseur de service la génération d'une nouvelle clé de cryptographie courante, et
- transférer la nouvelle clé de cryptographie courante dans l'étiquette RFID.

Avantageusement, ledit téléphone est configuré pour :
- réaliser une commande d'inventaire pour trouver et sélectionner l'identité de l'étiquette RFID, et
- lancer une commande de défi puis une commande d'authentification pour authentifier l'étiquette RFID.

Avantageusement, différentes étiquettes RFID correspondant à différentes applications sont collées sur le téléphone.

L'invention vise aussi un système d'authentification comportant le dispositif d'authentification selon l'une quelconque des caractéristiques ci-dessus, un terminal d'accès et un serveur de fournisseur de service, ledit terminal d'accès étant configuré pour :
- se connecter via une deuxième liaison internet sécurisée audit serveur de fournisseur de service,
- récupérer la clé de cryptographie courante depuis ledit serveur, et
- authentifier l'étiquette RFID via ladite clé de cryptographie courante afin de permettre l'accès de l'étiquette au service d'intérêt.

Avantageusement, les première et deuxième liaisons sécurisées comportent un protocole assurant une confidentialité des liaisons sélectionnées parmi les types de liaisons suivantes : SSL/TLS, IPSEC, SSH.

Avantageusement, ledit serveur de fournisseur de service est configuré pour fournir de manière indépendante la clé de cryptographie au téléphone et au terminal d'accès suivant les première et deuxième liaisons sécurisées.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
La Fig. 1 illustre de manière schématique une étiquette RFID adaptée pour accéder à un service d'intérêt auprès d'un terminal d'accès, selon un mode de réalisation de l'invention ;
La Fig. 2 illustre de manière schématique un dispositif d'authentification comportant une étiquette RFID et un téléphone NFC, selon un mode de réalisation de l'invention ;
La Fig. 3 illustre de manière schématique l'étiquette RFID collée sur le téléphone NFC, selon un mode de réalisation préféré de l'invention ;
La Fig. 4 illustre de manière schématique un système d'authentification, selon un mode de réalisation préféré de l'invention ;
La Fig. 5 illustre de manière schématique un procédé d'initialisation de la clé de cryptographie dans l'étiquette RFID, selon un mode de réalisation de l'invention ;
La Fig. 6 illustre de manière schématique un procédé de mise à jour de la clé de cryptographie dans l'étiquette RFID, selon un mode de réalisation de l'invention ;
La Fig. 7 illustre de manière schématique un procédé de l'accès de l'étiquette RFID au service d'intérêt du terminal d'accès, selon un mode de réalisation de l'invention ; et
La Fig. 8 illustre de manière schématique un procédé de récupération par le terminal d'accès de la clé de cryptographie courante, selon un mode de réalisation de l'invention.

### EXPOSÉ DÉTAILLÉ DE MODES DE RÉALISATION PARTICULIERS

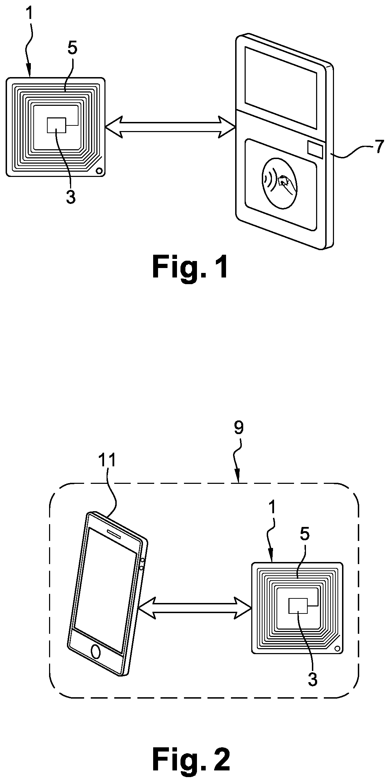

La Fig. 1 illustre de manière schématique une étiquette RFID adaptée pour accéder à un service d'intérêt auprès d'un terminal d'accès, selon un mode de réalisation de l'invention.

La radio-étiquette ou étiquette RFID 1 (de l'anglais Radio Frequency Identification) comporte un circuit intégré 3 et une antenne 5 reliée au circuit intégré 3. Le circuit intégré 3 comporte un lecteur en champ proche NFC (Near Field Communication) configuré pour recevoir via l'antenne 5 des signaux radio depuis une entité extérieure munie également d'un lecteur NFC ainsi que pour émettre des signaux radio vers cette entité extérieure qui peut être un terminal d'accès 7 à une application ou un service.

Le circuit intégré 3 est configuré pour permettre une authentification cryptographique de l'étiquette RFID 1 par le terminal d'accès 7 via une clé de cryptographie courante partagée par l'étiquette RFID 1 et le terminal d'accès 7. Cette authentification permet à un utilisateur de l'étiquette RFID 1 d'accéder de manière sécurisée à une application ou un service d'intérêt fourni par le terminal d'accès 7.

En effet, le circuit intégré 3 de l'étiquette RFID 1 comporte des schémas d'authentification cryptographique ainsi que d'autres fonctionnalités de sécurité introduits par le standard de l'ISO 15693-3 (amendement « 4 »).

Plus particulièrement, l'amendement « 4 » de l'ISO 15693-3 introduit pour les étiquettes RFID de nombreuses fonctionnalités de sécurité nouvelles parmi lesquelles :
- Des caractéristiques de schémas d'authentification cryptographique se fondant sur le catalogue de suites cryptographiques de la norme ISO 29167-X permettant d'utiliser des analyses cryptographiques du type AES (Automated Algebraic Cryptanlysis), PRESENT, ou GRAIN128 comme primitives symétriques. Chaque suite cryptographique est identifiée par un identifiant sur 8 bits (CSI) défini dans le standard ISO 29167-1. Ce nouveau cadre de sécurité permet une authentification ou une authentification mutuelle ainsi qu'un échange de messages chiffrés.
- Un nouvel état de sécurité « Secure State » peut être sélectionné pour activer ces fonctions de sécurité.
- Des bits spécifiques dans la réponse de l'étiquette RFID permet de communiquer l'état du calcul cryptographique (celui-ci pouvant prendre plus de temps que ces simples échanges de trames) et de prévenir par des codes d'erreurs en cas d'apparition d'un problème.
- La réponse de l'étiquette d'une séquence de Barker « Barker code » de 7 bits (0100111b) et d'un 8^{ème} bit de fin « done flag » qui montre si l'étiquette est toujours en train d'effectuer une commande ou si elle a fini (b8=1).
- La transition de l'état prêt « ReadyState » dans le diagramme d'état vers l'état sécurisé « SecureState » est faite quand une authentification ou une authentification mutuelle est réussie conformément à la crypto suite utilisée. Le même type de contrainte s'applique pour passer de l'état « Quiet » à l'état « SecureState ».
- Des commandes de sécurité spécifique sont ajoutées comportant les commandes suivantes : défi « Challenge », authentifier « Authenticate », mise-à-jour de clé « KeyUpdate », AuthCom, et SecureCom.
- L'étiquette RFID a la possibilité de répondre immédiatement ou de façon synchrone (l'étiquette continue de répondre toutes les 20 ms indiquant qu'elle est encore en train de calculer sa réponse) ou de façon asynchrone (l'étiquette après une première réponse attend d'avoir fini son calcul avant d'envoyer la réponse finale).
- La commande « Challenge » envoyée par le lecteur informe une ou plusieurs étiquettes de calculer le chiffré du défi (challenge) selon la crypto suite spécifiée. Cette valeur est gardée en mémoire dans l'attente d'une commande « Authenticate ».
- La commande « Authenticate » permet une authentification de l'étiquette ou du lecteur ou même une authentification mutuelle selon la crypto suite utilisée par le renvoi de la valeur calculée lors de la commande « Challenge ». Si l'authentification est réussie, l'étiquette se met dans le mode « SecureState ».
- La commande « KeyUpdate » permet de changer la clé cryptographique utilisée. Elle ne peut s'utiliser qu'après une authentification valide. La nouvelle clé est envoyée chiffrée par l'ancienne clé respectant ainsi la confidentialité.
- La commande « AuthCom » permet d'associer un MAC (Message Authentication Code) à un message.
- La commande « SecureCom » permet d'envoyer des messages chiffrés.

La norme amendement « 4 » de l'ISO 15693-3 permet donc une authentification de l'étiquette RFID 1 selon la crypto suite spécifiée et un changement de la clé en toute confidentialité.

La Fig. 2 illustre de manière schématique un dispositif d'authentification comportant une étiquette RFID et un téléphone NFC, selon un mode de réalisation de l'invention.

Le dispositif d'authentification 9 comporte une étiquette RFID 1 et un téléphone NFC 11 placé à proximité de l'étiquette RFID 1 et tout au moins à une distance inférieure à environ 1 m. On notera que la communication en champ proche NFC correspond à une liaison sans fil à courte portée jusqu'à une distance d'environ un mètre.

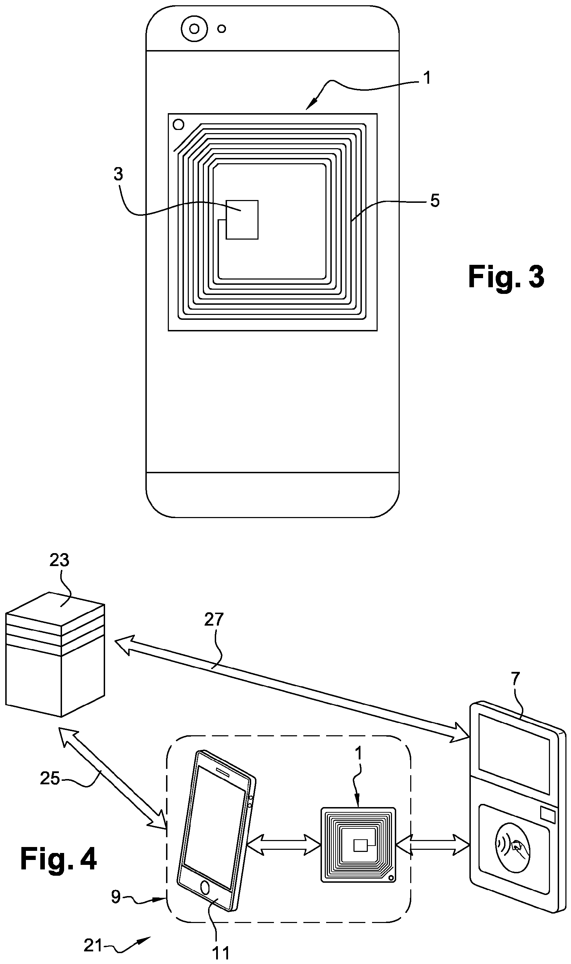

L'étiquette RFID 1 et le téléphone NFC 11 du dispositif d'authentification 9 partagent une même clé de cryptographie permettant une communication sans fil sécurisée entre les deux éléments. En effet, le circuit intégré 3 de l'étiquette RFID 1 comporte des fonctionnalités de sécurité selon l'amendement « 4 » de l'ISO 15693-3 telles que décrites précédemment et plus particulièrement, des schémas d'authentification cryptographique ainsi que des commandes spécifiques de « défi-réponse », « d'authentification » et de « mise-à-jour » de clés de cryptographie. Ceci permet à l'étiquette RFID 1 de récupérer une nouvelle clé de cryptographie mise à jour par le téléphone NFC après l'authentification par ce dernier de l'étiquette RFID via la clé de cryptographie initiale préalablement partagée par l'étiquette RFID 1 et le téléphone NFC 11 (voir Fig. 4).

Bien entendu, lors de l'opération de mise à jour de la clé de cryptographie, l'étiquette RFID 1 est disposée à proximité du téléphone NFC 11.

Selon un mode de réalisation de la présente invention, l'étiquette RFID 1 peut être collée sur une carte ou un badge qu'on place à côté du téléphone NFC 11 lors de la mise à jour de la clé de cryptographie.

Selon un autre mode de réalisation préféré de la présente invention, l'étiquette RFID 1 est collée sur le téléphone NFC 11 comme représenté sur la Fig. 3.

En particulier, l'étiquette RFID 1 peut être collée sur le téléphone 11 en vis-à-vis de l'antenne du lecteur NFC (non représenté) embarqué dans le téléphone 11 permettant ainsi un couplage optimal entre l'antenne 5 de l'étiquette RFID 1 et celui du lecteur NFC du téléphone 11. Il est ainsi avantageux de coller l'étiquette RFID 1 au capot sur le dos du téléphone 11 en regard de la batterie sur laquelle est en général disposée l'antenne NFC du téléphone 11. Elle peut également être collée au dos d'une coque de protection du téléphone 11 ou entre la coque et le téléphone 11 où elle sera alors invisible. Elle peut également être complètement intégrée dans la coque.

Avantageusement, différentes étiquettes RFID 1 correspondant à différentes applications peuvent être collées sur le téléphone 11. En effet, l'empilement d'étiquettes RFID 1 ne pose aucun problème car la technologie NFC est prévue pour lire des étiquettes empilées grâce à un petit décalage de la fréquence de résonnance de l'antenne.

La Fig. 4 illustre de manière très schématique un système d'authentification, selon un mode de réalisation préféré de l'invention.

Le système d'authentification 21 comporte l'étiquette RFID 1, le téléphone NFC 11, le terminal d'accès 7 muni d'un lecteur NFC ainsi qu'un serveur de fournisseur de service 23. Le dispositif d'authentification 9 constitué de l'étiquette RFID 1 et du téléphone NFC 11 fait ainsi partie d'un écosystème qui comprend le serveur du fournisseur de service 23 et le terminal d'accès 7 adapté pour authentifier l'étiquette RFID 1 avant de donner l'accès par exemple, à un bâtiment, une voiture, un paiement, une information, etc. Des première et deuxième liaisons sécurisées 25, 27 et indépendantes sont assurées entre d'une part le serveur du fournisseur de service 23 et d'autre part le téléphone NFC 11 et le terminal d'accès 7 respectivement. Les première et deuxième liaisons sécurisées 25, 27 s'effectuent grâce à des connexions internet 3G/4G/5G sécurisées comportant un protocole assurant une confidentialité des liaisons sélectionnées parmi les types de liaisons suivantes : SSL/TLS, IPSEC, SSH ou par un autre protocole assurant la confidentialité ou même par SMS. Les connexions peuvent également être relayées par un ordinateur en Bluetooth ou Wifi. Les première et deuxième liaisons internet sécurisées 25, 27 permettent au serveur de fournisseur de service 23 de fournir au téléphone 11 et au terminal d'accès 7 une clé de cryptographie partagée par l'étiquette RFID 1. Plus particulièrement, la première liaison 25 permet d'initialiser la clé de cryptographie dans l'étiquette RFID 1 ou de la mettre à jour via le téléphone 11, tandis que la deuxième liaison 27 qui est indépendante de la première liaison 25 permet au terminal d'accès 7 de récupérer la clé de cryptographie partagée par l'étiquette RFID 1.

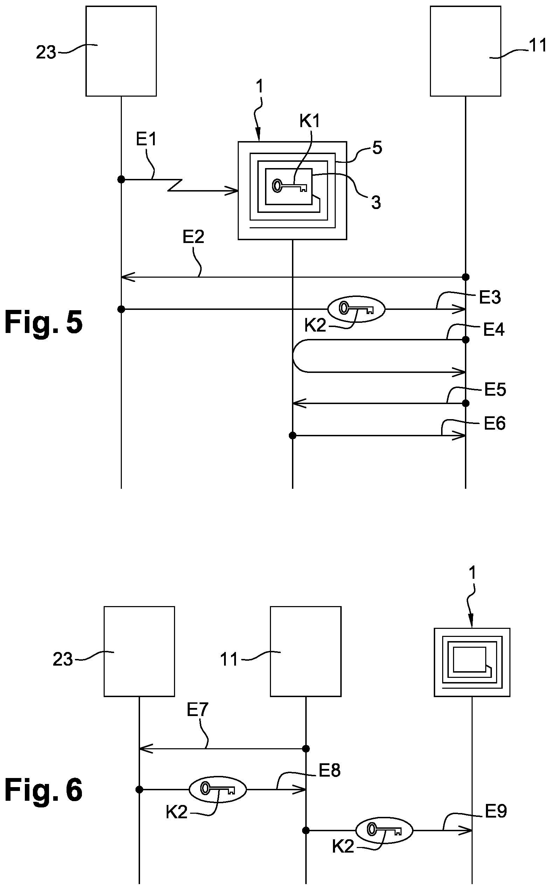

La Fig. 5 illustre de manière schématique les étapes d'un procédé d'initialisation de la clé de cryptographie dans l'étiquette RFID, selon un mode de réalisation de l'invention.

Au départ, (étape E1) le serveur fournisseur de service 23 fournit l'étiquette RFID 1 comportant la clé de cryptographie à un client ou utilisateur pour accéder de manière sécurisée à un service d'intérêt auprès du terminal d'accès 7. L'étiquette RFID 1 comporte ainsi une clé de cryptographie initiale K1 connue par le serveur de fournisseur de service 23.

A l'étape E2, le téléphone NFC 11 est configuré pour se connecter via la première liaison internet sécurisée 25 au serveur de fournisseur de service 23.

A l'étape E3, le téléphone NFC 11 est configuré pour récupérer depuis le serveur de fournisseur de service 23 la clé de cryptographie initiale K1 prédéfinie dans l'étiquette RFID 1.

On considère par ailleurs que le téléphone NFC 11 est muni d'une application qui permet de communiquer avec l'étiquette RFID 1 grâce à sa fonctionnalité NFC. Cette application a par exemple été préalablement installée par l'utilisateur.

A l'étape E4, le téléphone NFC 11 est configuré pour réaliser une commande d'inventaire « Inventory » lui permettant de trouver et sélectionner l'identité de l'étiquette RFID 1.

A l'étape E5, le téléphone NFC 11 est configuré pour lancer à l'étiquette RFID 1 une commande de défi « Challenge » puis une commande d'authentification « Authenticate » avec la clé de cryptographie initiale K1 partagée avec l'étiquette RFID 1 et qu'il a récupérée auparavant (à l'étape E3) depuis le serveur de fournisseur de service 23.

A l'étape E6, le téléphone NFC 11 vérifie la réponse de l'étiquette RFID 1 et si elle correspond au chiffré du défi (challenge) alors l'étiquette 1 est considérée comme authentifiée par le téléphone NFC 11.

La Fig. 6 illustre de manière schématique les étapes d'une mise à jour de la clé de cryptographie dans l'étiquette RFID, selon un mode de réalisation de l'invention.

Après l'authentification de l'étiquette RFID 1 par le téléphone NFC 11 selon les étapes précédentes (E2 à E6), le téléphone NFC 11 met à jour à l'étape E7 la clé de cryptographie en lançant auprès du serveur de fournisseur de service 23 une commande « KeyUpdate » qui génère une nouvelle clé de cryptographie courante K2.

A l'étape E8, le téléphone NFC 11 récupère la nouvelle clé de cryptographie courante K2 depuis le serveur de fournisseur de service 23 via la première liaison sécurisée 25.

Le téléphone NFC 11 transfère ensuite à l'étape E9 la nouvelle clé de cryptographie courante K2 dans l'étiquette RFID 1. La clé de cryptographie initiale K1 dans l'étiquette RFID 1 est remplacée par la nouvelle clé de cryptographie courante K2.

Ce type de mise à jour peut être effectué assez souvent (par exemple une fois par jour) afin de limiter l'exposition de la clé de cryptographie à toute fuite due à des attaques physiques ou des attaques par canaux auxiliaires (DPA, CPA, SPA, ...). On remarquera que pendant toutes ces communications, les clés de cryptographie initiale ou courante n'apparaissent jamais en clair. En effet, les clés de cryptographie initiale et courante sont toujours chiffrées par la communication internet sécurisée (par exemple, TLS/SS) entre le serveur 23 et le téléphone 11. En outre, chaque clé de cryptographie courante K2 est sécurisée par le chiffrement au moyen de la clé de cryptographie précédente K1 lors de son transfert depuis le téléphone NFC 11 vers l'étiquette RFID 1. Avantageusement, il n'est pas nécessaire pour le téléphone NFC 11 de connaître la clé de cryptographie et encore moins de la stocker.

En outre, une fois la clé de cryptographie courante K2 transférée dans l'étiquette RFID 1, le téléphone NFC 11 ne joue plus aucun rôle et l'accès au terminal d'accès 7 se fait uniquement entre ce dernier et l'étiquette RFID 1.

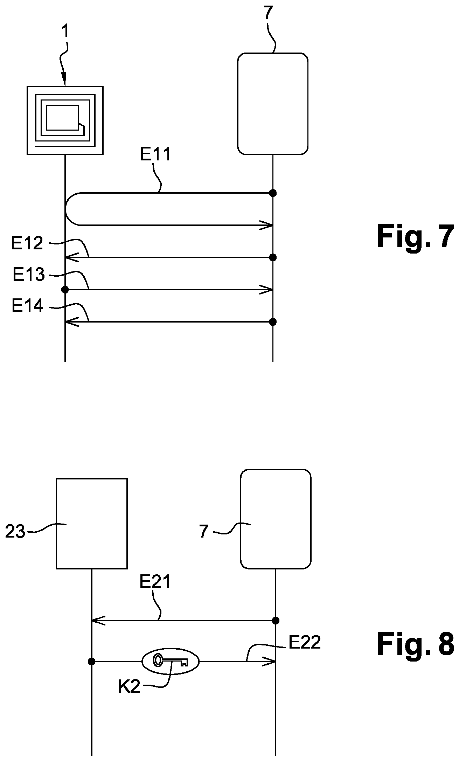

En effet, la Fig. 7 illustre de manière schématique les étapes de l'accès de l'étiquette RFID au service d'intérêt du terminal d'accès, selon un mode de réalisation de l'invention.

A l'étape E11, le terminal d'accès 7 envoie une commande d'inventaire « Inventory » à l'étiquette RFID 1. On notera que si le téléphone NFC 11 est allumé, le terminal d'accès 7 verra la réponse du lecteur NFC du téléphone 11 et la réponse de l'étiquette RFID 1. Les identifications « AFI » et « UID » de l'étiquette RFID 1 permettent au terminal d'accès 7 d'identifier et de sélectionner l'étiquette RFID 1 sans risque d'erreur.

A l'étape E12, le terminal d'accès 7 envoie une commande de défi-réponse « Challenge » à l'étiquette RFID 1 puis une commande d'authentification « Authenticate » sachant que les deux entités partagent la même clé de cryptographie K2.

A l'étape E13, le terminal d'accès 7 vérifie la réponse de l'étiquette RFID 1 et si elle correspond au chiffré du défi (challenge) alors l'étiquette RFID 1 est considérée comme authentifiée. En effet, le terminal d'accès 7 dispose d'une connaissance préalable de la clé de cryptographie courante K2 grâce au serveur du fournisseur de service 23 (voir Fig. 8). On notera par ailleurs que, selon la suite crypto utilisée sur l'étiquette RFID, celle-ci peut authentifier aussi le terminal d'accès ou alors faire une authentification mutuelle.

Finalement, à l'étape E14, le terminal d'accès 7 donne alors l'accès au service d'intérêt demandé par l'utilisateur de l'étiquette RFID 1.

La Fig. 8 illustre de manière schématique les étapes de la récupération par le terminal d'accès de la clé de cryptographie courante, selon un mode de réalisation de l'invention.

A l'étape E21, le terminal d'accès 7 se connecte via la deuxième liaison internet sécurisée 27 au serveur de fournisseur de service 23 afin de connaître la clé de cryptographie courante K2 partagée avec l'étiquette RFID 1.

A l'étape E22, le terminal d'accès 7 récupère la clé de cryptographie courante K2 depuis le serveur de fournisseur de service 23. Il peut alors utiliser cette clé de cryptographie courante K2 pour authentifier l'étiquette RFID 1 afin de permettre l'accès de l'utilisateur de l'étiquette RFID 1 au service d'intérêt comme indiqué par le procédé en référence avec la Fig. 7.

On notera que les différents modes de réalisation de l'invention présentent plusieurs avantages par rapport à l'art antérieur et en particulier les avantages suivants :
- Un faible encombrement du dispositif d'authentification.
- Aucun démontage du téléphone ou de connexion physique n'est nécessaire.
- Indépendance vis-à-vis du constructeur du téléphone, de l'opérateur téléphonique, et du système d'exploitation (OS).
- Aucun stockage de la clé de cryptographie dans le téléphone n'est nécessaire.
- Le téléphone peut être éteint tant qu'une mise à jour d'une clé de cryptographie n'est pas nécessaire tout en gardant la fonctionnalité d'authentification.
- Il est plus simple pour l'utilisateur de prêter l'étiquette RFID à quelqu'un plutôt que de prêter le téléphone.
- Finalement, une mise à jour de la clé de cryptographie peut être réalisée fréquemment.

## Revendications

1. Etiquette RFID adaptée pour accéder à un service d'intérêt auprès d'un terminal d'accès, **caractérisée en ce que** ladite étiquette RFID (1) comporte un circuit intégré (3) configuré pour :
- permettre une authentification cryptographique de l'étiquette RFID (1) par ledit terminal d'accès (7) via une clé de cryptographie courante partagée par l'étiquette RFID (1) et le terminal d'accès (7), ladite authentification permettant l'accès audit service d'intérêt, et
- permettre à l'étiquette RFID (1) de récupérer depuis un téléphone NFC une nouvelle clé de cryptographie courante mise à jour par ledit téléphone NFC (11) après l'authentification de l'étiquette RFID (1) par ledit téléphone NFC (11) via une clé de cryptographie initiale préalablement partagée par l'étiquette RFID (1) et ledit téléphone (11).

2. Etiquette RFID selon la revendication 1, **caractérisée en ce que** ledit circuit intégré (3) comporte des schémas d'authentification cryptographique ainsi que des commandes spécifiques de défi-réponse, d'authentification et de mise à jour de clé de cryptographie, définies selon le standard de l'ISO 15693-3 (amendement 4).

3. Etiquette RFID selon la revendication 1 ou 2, **caractérisée en ce que** l'étiquette RFID (1) est disposée à proximité dudit téléphone (11) lors d'une opération de mise à jour de la clé de cryptographie.

4. Etiquette RFID selon l'une quelconque des revendications précédentes, **caractérisée en ce que** l'étiquette RFID (1) est collée sur ledit téléphone (11).

5. Etiquette RFID selon la revendication 4, **caractérisée en ce que** l'étiquette RFID (1) est collée sur le dos du téléphone (11) ou sur la coque protégeant le téléphone en vis-à-vis de l'antenne NFC du téléphone.

6. Etiquette RFID selon l'une quelconque des revendications 1 à 3, **caractérisée en ce que** l'étiquette RFID (1) est collée sur une carte ou un badge.

7. Dispositif d'authentification comportant l'étiquette RFID selon l'une quelconque des revendications précédentes, **caractérisé en ce qu'**il comporte en outre un téléphone NFC (11) configuré pour authentifier l'étiquette RFID (1) et pour mettre à jour la clé de cryptographie de l'étiquette RFID.

8. Dispositif d'authentification selon la revendication 7, **caractérisé en ce que** le téléphone NFC est configuré pour :
- se connecter via une première liaison internet sécurisée (25) à un serveur de fournisseur de service (23),
- récupérer depuis ledit serveur de fournisseur de service (23) une clé de cryptographie initialement prédéfinie dans l'étiquette RFID (1),
- communiquer via sa fonctionnalité NFC avec l'étiquette RFID (1),
- authentifier l'étiquette RFID (1) via ladite clé de cryptographie initialement partagée par l'étiquette RFID,
- mettre à jour la clé de cryptographie en lançant auprès du serveur de fournisseur de service (23) la génération d'une nouvelle clé de cryptographie courante, et
- transférer la nouvelle clé de cryptographie courante dans l'étiquette RFID (1).

9. Dispositif d'authentification selon la revendication 8, **caractérisé en ce que** ledit téléphone est configuré pour :
- réaliser une commande d'inventaire pour trouver et sélectionner l'identité de l'étiquette RFID (1), et
- lancer une commande de défi puis une commande d'authentification pour authentifier l'étiquette RFID (1).

10. Dispositif d'authentification selon l'une quelconque des revendications 7 à 9, **caractérisé en ce que** différentes étiquettes RFID correspondant à différentes applications sont collées sur le téléphone (11).

11. Système d'authentification comportant le dispositif d'authentification selon l'une quelconque des revendications 8 à 10, **caractérisé en ce qu'**il comporte en outre un terminal d'accès (7) et un serveur de fournisseur de service (23), ledit terminal d'accès étant configuré pour :
- se connecter via une deuxième liaison internet sécurisée (27) audit serveur de fournisseur de service (23),
- récupérer la clé de cryptographie courante depuis ledit serveur de fournisseur de service (23), et
- authentifier l'étiquette RFID (1) via ladite clé de cryptographie courante afin de permettre l'accès de l'étiquette au service d'intérêt.

12. Système d'authentification selon la revendication 11, **caractérisé en ce que** les première et deuxième liaisons sécurisées (25, 27) comportent un protocole assurant une confidentialité des liaisons sélectionnées parmi les types de liaisons suivantes : SSL/TLS, IPSEC, SSH.

13. Système d'authentification selon la revendication 11 ou 12, **caractérisé en ce que** ledit serveur de fournisseur de service (23) est configuré pour fournir de manière indépendante la clé de cryptographie au téléphone (11) et au terminal d'accès (7) suivant les première et deuxième liaisons sécurisées (25, 27).

## Patentansprüche

1. RFID-Etikett, das für den Zugang zu einem interessierenden Dienst an einem Zugangsendgerät geeignet ist,
**dadurch gekennzeichnet, dass**
das RFID-Etikett (1) eine integrierte Schaltung (3) enthält, die dazu ausgelegt ist,
- eine kryptographische Authentifizierung des RFID-Etiketts (1) durch das Zugangsendgerät (7) mittels eines aktuellen kryptographischen Schlüssels zu ermöglichen, der von dem RFID-Etikett (1) und dem Zugangsendgerät (7) gemeinsam genutzt wird, wobei die Authentifizierung den Zugang zu dem interessierenden Dienst ermöglicht, und
- dem RFID-Etikett (1) zu ermöglichen, von einem NFC-Telefon einen neuen aktuellen kryptographischen Schlüssel abzurufen, der von dem NFC-Telefon (11) nach der Authentifizierung des RFID-Etiketts (1) durch das NFC-Telefon (11) über einen ursprünglichen kryptographischen Schlüssel aktualisiert wurde, der zuvor von dem RFID-Etikett (1) und dem Telefon (11) gemeinsam genutzt wurde.

2. RIFD-Etikett nach Anspruch 1,
**dadurch gekennzeichnet, dass**
die integrierte Schaltung (3) kryptographische Authentifizierungsschemata und spezifische Challenge-Response-, Authentifizierungs- und Schlüsselaktualisierungsbefehle enthält, die gemäß dem Standard von ISO 15693-3 (Änderung 4) definiert sind.

3. RFID-Etikett nach Anspruch 1 oder 2,
**dadurch gekennzeichnet, dass**
das RFID-Etikett (1) während eines kryptographischen Schlüsselaktualisierungsvorgangs in der Nähe des Telefons (11) angeordnet ist.

4. RFID-Etikett nach einem der vorangehenden Ansprüche,
**dadurch gekennzeichnet, dass**
das RFID-Etikett (1) auf dem Telefon (11) aufgeklebt ist.

5. RFID-Etikett nach Anspruch 4,
**dadurch gekennzeichnet, dass**
das RFID-Etikett (1) an der Rückseite des Telefons (11) oder auf der das Telefon schützenden Schale der NFC-Antenne des Telefons gegenüberliegend aufgeklebt ist.

6. RFID-Etikett nach einem der Ansprüche 1 bis 3,
**dadurch gekennzeichnet, dass**
das RFID-Etikett (1) auf einer Karte oder einem Badge aufgeklebt ist.

7. Authentifizierungsvorrichtung mit einem RFID-Etikett nach einem der vorangehenden Ansprüche,
**dadurch gekennzeichnet, dass**
sie ferner ein NFC-Telefon (11) enthält, das dazu ausgelegt ist, das RFID-Etikett (1) zu authentifizieren und den kryptografischen Schlüssel des RFID-Etiketts zu aktualisieren.

8. Authentifizierungsvorrichtung nach Anspruch 7,
**dadurch gekennzeichnet, dass**
das NFC-Telefon dazu ausgelegt ist,
- sich über eine erste sichere Internetverbindung (25) mit dem Server (23) eines Dienstanbieters zu verbinden,
- einen ursprünglich im RFID-Etikett (1) vordefinierten kryptographischen Schlüssel vom Server (23) des Dienstanbieters abzurufen,
- über seine NFC-Funktionalität mit dem RFID-Etikett (1) zu kommunizieren,
- das RFID-Etikett (1) über den ursprünglich vom RFID-Etikett genutzten kryptographischen Schlüssel zu authentifizieren,
- den kryptographischen Schlüssel zu aktualisieren, indem die Erzeugung eines neuen aktuellen kryptographischen Schlüssels beim Server (23) des Dienstanbieters initiiert wird, und
- den neuen aktuellen kryptografischen Schlüssel in das RFID-Etikett (1) zu übertragen.

9. Authentifizierungsvorrichtung nach Anspruch 8,
**dadurch gekennzeichnet, dass**
das Telefon dazu ausgelegt ist,
- einen Inventarisierungsbefehl auszuführen, um die Identität des RFID-Etiketts (1) aufzufinden und auszuwählen, und
- einen Challenge-Befehl und dann einen Authentifizierungsbefehl zu erteilen, um das RFID-Etikett (1) zu authentifizieren.

10. Authentifizierungsvorrichtung nach einem der Ansprüche 7 bis 9,
**dadurch gekennzeichnet, dass**
die verschiedenen RFID-Etiketten, die verschiedenen Anwendungen entsprechen, auf das Telefon (11) aufgeklebt sind.

11. Authentifizierungssystem mit der Authentifizierungsvorrichtung nach einem der Ansprüche 8 bis 10,
**dadurch gekennzeichnet, dass**
es ferner ein Zugangsendgerät (7) und den Server (23) eines Dienstanbieters umfasst, wobei das Zugangsendgerät dazu ausgelegt ist,
- sich über eine zweite sichere Internetverbindung (27) mit dem Server (23) des Dienstanbieters zu verbinden,
- den aktuellen kryptographischen Schlüssel vom Server (23) des Dienstanbieters abzurufen, und
- das RFID-Etikett (1) über den aktuellen kryptographischen Schlüssel zu authentifizieren, um den Zugang des Etiketts zum interessierenden Dienst zu ermöglichen.

12. Authentifizierungssystem nach Anspruch 11,
**dadurch gekennzeichnet, dass**
die erste und die zweite sichere Verbindung (25, 27) ein Protokoll enthalten, das die Vertraulichkeit der aus den folgenden Arten von Verbindungen ausgewählten Verbindungen gewährleistet: SSL/TLS, IPSEC, SSH.

13. Authentifizierungssystem nach Anspruch 11 oder 12,
**dadurch gekennzeichnet, dass**
der Server (23) des Dienstanbieters dazu ausgelegt ist, dem Telefon (11) und dem Zugangsendgerät (7) den kryptographischen Schlüssel unabhängig über die sichere erste und zweite Verbindung (25, 27) bereitzustellen.

## Claims

1. An RFID tag adapted to access a service of interest from an access terminal, **characterised in that** said RFID tag (1) includes an integrated circuit (3) configured to:
- enable a cryptographic authentication of the RFID tag (1) by said access terminal (7) via a current cryptographic key shared by the RFID tag (1) and the access terminal (7), said authentication enabling access to said service of interest, and
- enable the RFID tag (1) to retrieve from an NFC phone a new current cryptographic key updated by said NFC phone (11) after said NFC phone (11) authenticated the RFID tag (1) via an initial cryptographic key previously shared by the RFID tag (1) and said phone (11).

2. The RFID tag according to claim 1, **characterised in that** said integrated circuit (3) includes cryptographic authentication diagrams as well as specific challenge-response, cryptographic key authentication and update commands, defined according to ISO 15693-3 standard (amendment 4).

3. The RFID tag according to claim 1 or 2, **characterised in that** the RFID tag (1) is disposed in proximity to said phone (11) during an update operation of the cryptographic key.

4. The RFID tag according to any of the previous claims, **characterised in that** the RFID tag (1) is bonded to said phone (11).

5. The RFID tag according to claim 4, **characterised in that** the RFID tag (1) is bonded to the back of the phone (11) or on the case protecting the phone toward the NFC antenna of the phone.

6. The RFID tag according to any of claims 1 to 3, **characterised in that** the RFID tag (1) is bonded to a board or a badge.

7. An authentication device including the RFID tag according to any of the previous claims, **characterised in that** it further includes an NFC phone (11) configured to authenticate the RFID tag (1) and to update the cryptographic key of the RFID tag.

8. The authentication device according to claim 7, **characterised in that** the NFC phone is configured to:
- be connected via a first secure Internet link (25) to a service provider server (23),
- retrieve from said service provider server (23) a cryptographic key initially predefined in the RFID tag (1),
- communicate via its NFC functionality with the RFID tag (1),
- authenticate the RFID tag (1) via said cryptographic key initially shared by the RFID tag,
- update the cryptographic key by initiating from the service provider server (23) generating a new current cryptographic key, and
- transfer the new current cryptographic key into the RFID tag (1).

9. The authentication device according to claim 8, **characterised in that** said phone is configured to:
- perform an inventory command to find and select the identifier of the RFID tag (1), and
- initiate a challenge command and then an authentication command to authenticate the RFID tag (1).

10. The authentication device according to any of claims 7 to 9, **characterised in that** different RFID tags corresponding to different applications are bonded to the phone (11).

11. An authentication system including the authentication device according to any of claims 8 to 10, **characterised in that** it further includes an access terminal (7) and a service provider server (23), said access terminal being configured to:
- be connected via a second secure Internet link (27) to said service provider server (23),
- retrieve the current cryptographic key from said service provider server (23), and
- authenticate the RFID tag (1) via said current cryptographic key in order to enable the tag to access the service of interest.

12. The authentication system according to claim 11, **characterised in that** the first and second secure links (25, 27) include a protocol ensuring privacy of links selected from the following link types: SSL/TLS, IPSEC, SSH.

13. The authentication system according to claim 11 or 12, **characterised in that** said service provider server (23) is configured to independently provide the cryptographic key to the phone (11) and to the access terminal (7) according to the first and second secure links (25, 27).
